Europäisches Patentamt

European Patent Office

Office européen des brevets

(19)

(11) Veröffentlichungsnummer: **0 513 751 A1**

## (12) EUROPÄISCHE PATENTANMELDUNG

(21) Anmeldenummer: **92108050.3**

(22) Anmeldetag: **13.05.92**

(51) Int. Cl.⁵: **B29C 31/04**, B29C 45/47

(30) Priorität: **14.05.91 DE 4115609**

(43) Veröffentlichungstag der Anmeldung:
**19.11.92 Patentblatt 92/47**

(84) Benannte Vertragsstaaten:
**AT BE CH DE DK ES FR GB IT LI NL SE**

(71) Anmelder: **REAL GmbH**
**Gartenweg 3**
**W-8717 Mainbernheim(DE)**

(72) Erfinder: **Hentschel, Martin**
**Gartenweg 3**
**W-8717 Mainbernheim(DE)**

(54) **Verfahren und Vorrichtung zur Herstellung eines säulenförmigen Hohlkörpers.**

(57) Ein Verfahren und eine Vorrichtung zur Herstellung eines säulenförmigen Hohlkörpers (1), bei dem ein Gemisch mit einem wesentlichen Gehalt an thermoplastischen Partikeln zu einem Pastenstrang erschmolzen und in einer Hohlform (4) schleifenartig aufeinandergeschichtet und in die Gestalt des Hohlkörpers (1) überführt wird, wonach dieser durch Abkühlung verfestigt und entnommen wird. Der Pastenstrang (3) wird dabei um seine Achse rotierend und konzentrisch an der Stirnseite in eine Hohlform (4) eingespeist, die in einem Abstand von der Innenwandung (6) einen Formkern (20) enthält, wobei der Pastenstrang (3) in dem durch den Abstand gebildeten Freiraum der Innenwandung (6) in Umfangsrichtung folgend zur Ablage gebracht wird und wobei die Einspeisung fortgesetzt wird, bis die Innenwandung (6) und der Formkern (20) von Bestandteilen des Pastenstranges (3) kontinuierlich durchgehend benetzt sind.

Fig.1

EP 0 513 751 A1

Die Erfindung betrifft ein Verfahren zur Herstellung eines säulenförmigen Körpers, bei dem ein Gemisch mit einem wesentlichen Gehalt an thermoplastischen Partikeln zu einem Pastenstrang erschmolzen, in eine Hohlform eingebracht,in der Hohlform schleifenartig aufeinandergeschichtet und in die Gestalt des Körpers überführt wird, wonach der Körper durch Abkühlung verfestigt und entnommen wird.

Ein solches Verfahren ist aus der DE PS 33 41 438 bekannt. Der mittels eines Extruders erschmolzene und in die Gestalt eines Pastenstranges überführte, thermoplastische Werkstoff wird dabei nach dem Verlassen des Extruders aufgeschäumt und in dem Zwischenraum zwischen zwei sich kontinuierlich von der Austrittsöffnung des Extruders weg bewegenden Siebbändern zur Ablage gebracht. Das Verhältnis aus der Zuführgeschwindigkeit des Stranges und der Abzugsgeschwindigkeit der Siebbänder ist dabei auf einen Wert eingestellt, der mit dem Verhältnis aus dem Abstand der Siebbänder und der Dicke des Stranges im wesentlichen übereinstimmt. Die Dichte der erhaltenen Schaustoffplatte stimmt dadurch im wesentlichen mit derjenigen des aufgeschäumten Stranges überein. Sie ist dementsprechend gering und läßt es nicht zu, eine solche Platte als statisch tragendes Konstruktionselement zu verwenden. Durch die beweglichen Siebbänder ist die zur Durchführung dieses bekannten Verfahrens benötigte Einrichtung außerdem sehr kompliziert und störanfällig. Die damit erzeugbaren Teile können grundsätzlich auch nur von plattenförmiger Gestalt sein und die bei ihrer Herstellung erzielbare Geschwindigkeit ist wegen der Unmöglichkeit, die Wärme schneller abzuführen, sehr gering. Hohlkörper lassen sich nach dem bekannten Verfahren nicht erzeugen.

Der Erfindung liegt die Aufgabe zugrunde, ein solches Verfahren derart weiter zu entwickeln, daß in vergleichsweise kürzerer Zeit säulenförmige Körper eines beliebigen Hohlprofils erhalten werden können, die sich durch eine bessere Festigkeit auszeichnen.

Diese Aufgabe wird erfindungsgemäß bei einem Verfahren der eingangs genannten Art mit den kennzeichnenden Merkmalen von Anspruch 1 gelöst. Auf vorteilhafte Ausgestaltungen nehmen die Ansprüche 2 bis 20 bezug.

Bei dem erfindungsgemäßen Verfahren ist es vorgesehen, daß der Pastenstrang um seine Achse rotierend und konzentrisch an der Stirnseite in eine Hohlform eingespeist wird, die in einem Abstand von der Innenwandung einen Formkern enthält, daß der Pastenstrang in dem durch den Abstand gebildeten Freiraum der Innenwandung in Umfangsrichtung folgend zur Ablage gebracht wird und daß die Einspeisung fortgesetzt wird, bis die Innenwandung und der Formkern von Bestandteilen des Pastenstranges kontinuierlich durchgehend benetzt sind. Auf den Pastenstrang wirken während des Einbringens in die Hohlform verschiedene Kräfte ein. Sein vorderes Ende sinkt hierdurch und durch die gute plastische Verformbarkeit nach der Einspeisung in der Hohlform ab und gelangt in einen Berührungskontakt mit deren Innenwandung und/oder der Stirnfläche des Formkerns, wobei sich eine gewisse gegenseitige Verklebung ergibt. Der Pastenstrang befindet sich neben der vorwärts gerichteten zugleich in einer rotierenden Bewegung. Die nachfolgend eingespeisten Bestandteile des Pastenstranges werden dadurch, der Umfangsrichtung folgend, kontinuierlich fortschreitend in dem Zwischenraum zwischen der Hohlform und dem Formkern zur Ablage gebracht, wobei sich eine gegenseitige Verklebung zunächst mit der Innenwandung und dem Formkern sowie anschließend mit bereits abgelegten Bestandteilen des Pastenstranges ergibt, bis der zur Verfügung stehende Freiraum zwischen den abgelegten Bestandteilen und der Austrittsöffnung des Extruders ausgefüllt ist. Der weiterhin in gleicher Weise zugeführte Pastenstrang bewirkt anschließend eine soweit gehende Relativ- und Umverlagerung der bereits abgelegten Bestandteile in dem Zwischenraum, daß es zu einem Aufbrechen der ursprünglichen Verklebung des Pastenstranges mit der Innenwandung und dem Formkern kommt sowie zu einer Überführung der ursprünglichen Gestalt des Pastenstranges in die Form eines Hohlkörpers. Dieser wird dabei fortschreitend im Bereich seiner Rückseite durch neue Teilabschnitte ergänzt, während seine Vorderseite den säulenförmigen Freiraum durchwandert und schließlich in Eingriff mit dem vorderen Ende der Hohlform gelangt. Zweckmäßigerweise ist in diesem Bereich eine Meßeinrichtung vorgesehen, welche die Fertigformung des neugebildeten Hohlkörpers signalisiert. Dieser wird nachfolgend durch Abkühlung so weitgehend verfestigt, daß in einem ersten Schritt der Formkern entfernt werden kann.

Die Verfestigung des Hohlkörpers zweckmäßig derart vorgenommen, daß zunächst der Formkern und erst danach die Hohlform der Einwirkung eines Kühlmittels ausgesetzt wird. Die sich ergebende Durchmesserreduzierung wirkt sich hierdurch zuerst im Bereich des Formkerns aus, was dessen Entnahme aus dem Hohlkörper erleichtert. Wegen seines vergleichsweise großen linearen Wärmeausdehnungskoeffizienten gelangt in bezug auf die Herstellung des Formkerns bevorzugt Aluminium zur Anwendung. Anschließend wird dem neu gebildeten Hohlkörper die restliche Wärme entzogen, was sowohl über die Hohlform als auch über den nunmehr freiliegenden Hohlraum erfolgen kann. Bedingt durch den im Vergleich zu Metallen hohen linearen Wärmeausdehnungskoeffizienten der Kunststoffe ergibt sich hierbei stets eine Spaltbildung in bezug auf die Innenwandung der Hohlform. Die Entnahme des Hohlkörpers kann dadurch äußerst einfach und unter Anwendung eines mechanischen Auswerfers oder eines fließfähigen Druckmittels erfolgen, beispielsweise unter Anwendung von Druckluft.

Das erfindungsgemäße Verfahren eignet sich besonders gut für die Verarbeitung von Kunststoffabfällen zu neuen Produkten. Die Kunststoffabfälle müssen hierzu in dem Maße zerkleinert und miteinander durchmischt werden, daß eine problemlose Einspeisung in den Extruder möglich ist. Neben den thermoplastischen Bestandteilen, beispielsweise solchen auf Polyolefin- oder PVC- Basis können nichtthermoplastische Bestandteile in dem Gemisch enthalten sein, beispielsweise mineralische Füllstoffe und/oder Gummiabfälle. Die Farbe der erhaltenen Hohlkörper läßt sich hierdurch ebensogut bestimmten Erfordernissen des Anwendungsfalles anpassen wie die mechanische, thermische und chemische Beständigkeit. Die Ausgangsmaterialien können beliebig gestaltet sein und beispielsweise Formteile und/oder Platten aus duroplastischen Kunststoffen mit einem Gehalt an textilen oder minderalischen Fasern und Folien in bedruckter oder unbedruckter Form umfassen.

Für die Durchführung des erfindungsgemäßen Verfahrens empfiehlt sich die Verwendung einer Vorrichtung, welche die Merkmale von Anspruch 6 aufweist. Auf vorteilhafte Ausgestaltungen nehmen die Ansprüche 7 bis 12 bezug.

Bei einer Vorrichtung nach dem Gattungsbegriff ist es erfindungsgemäß vorgesehen, daß der Extruder nur eine Extruderschnecke aufweist und daß die Einrichtung zur Formgebung aus einer Hohlform besteht, die von starren Innenwänden umschlossen ist sowie aus einem Formkern, der von dem dem Extruder gegenüber liegenden Ende in die Hohlform vorspringt. Die Rotationsbewegung läßt sich hierdurch am besten der Austriebsbewegung des Pastenstranges überlagern. Der Formkern kann einen gleichmäßig in Richtung seines vorspringenden Endes verjüngten Querschnitt haben.

Das Verhältnis aus dem freien Durchmesser $D_1$ der Austrittsöffnung und dem freien Durchmesser $D_2$ des Extruders sollte möglichst in dem Bereich zwischen 0,3 und 0,8 liegen.

Als vorteilhaft hat es sich aus dem gleichen Grunde bewährt, wenn die Austrittsöffnung von kreisförmigem Profil ist. Die erwünschte, rotierende Bewegung des Pastenstranges um seine Achse wird hierdurch begünstigt. Das Verhältnis aus der Länge und dem Durchmesser der Austrittsöffnung sollte außerdem so gering wie möglich sein und den Faktor 1 nicht überschreiten.

Der Extruder soll nach Möglichkeit nicht über eine Entgasungseinrichtung verfügen. Die mit dem Pastenstrang ausgestoßenen Luft- und/oder Gasblasen sind bei Verwendung einer solchen Ausführung überraschender Weise nicht gleichmäßig über den gesamten Querschnitt der Wandung des erhaltenen Hohlkörpers verteilt sondern auf eine radial innen liegende Zone der Wandung beschränkt, welche außen von einem völlig porenfreien Randbereich umschlossen ist. Der Randbereich ist in allen Umfangsbereichen von einer annähernd übereinstimmenden Breite und innen liegende Zone und der Randbereich heben sich optisch in klarer Weise voneinander ab. Lunkerbildungen im Bereich der äußeren Oberfläche wurden nicht beobachtet. Die Außenseite des Hohlkörpers kann vielmehr willkürlich strukturiert werden, was unter geschmacklichen Gesichtspunkten von großem Vorteil ist. Der vorstehend beschriebene Aufbau des Profils bedingt außerdem, bezogen auf das Gewicht des Hohlkörpers, eine besonders große Knick- und Biegefestigkeit sowie die Möglichkeit, den Formkern überraschend leicht entnehmen zu können.

Neben der vorstehend beschriebenen Hohlform können einem Extuder zumindest zwei weitere Hohlformen zugeordnet sein, wobei die einzelnen Hohlformen quer zur Austrittsöffnung des Extruders bewegbar und wahlweise vor der Austrittsöffnung positionierbar sind. Die Produktionsgeschwindigkeit bei der Herstellung des Hohlkörpers läst sich hierdurch wesentlich erhöhen, dergestalt, daß sich jeweils eine Hohlform in der Entleerungsposition befindet, eine Hohlform in der Befüllungsposition und eine Hohlform in der Abkühlposition.

Nach einer vorteilhaften Ausgestaltung ist es vorgesehen, daß nur ein einziger, koaxial zu dem Extruder angeordneter Formkern vorgesehen ist und daß der Formkern parallel zu seiner Achse vor- und zurückbewegbar ist. Eine entsprechende Ausführung ist nicht nur kostengünstig verfügbar, sondern sie begünstigt darüberhinaus eine besonders zügige Arbeitsweise insofern, als die nach der Entnahme des Formkerns freiliegende Innenseite des neu gebildeten Hohlkörpers unmittelbar der Einwirkung eines Kühlmittels ausgesetzt werden kann, was die weitere Abkühlung und Verfestigung beschleunigt.

Die einzelnen Hohlformen können bei einer solchen Ausführung der Vorrichtung in einem Revolver zusammengefaßt sein, der um eine Achse drehbar ist, die sich parallel zu der Achse des Extruders erstreckt. Der für die Relativbewegung der einzelnen Hohlformen benötigte Antrieb läßt sich hierdurch technisch vereinfachen.

Der Revolver kann zumindest bis zu seiner Achse in ein Wasserbad eintauchend angeordnet sein, wobei der Extruder und eine Auffangwanne für aus der Hohlform ausgestoßene Hohlkörper oberhalb des Wasserspiegels nebeneinanderliegend angeordnet sind. Bei einer kopakten und platzsparenden Bauweise resulieren bei einer solchen Bauweise besonders günstige Möglichkeiten, die Produktion des Hohlkörpers in vollem Umfang zu automatisieren.

Das Profil des säulenförmigen Hohlkörpers kann gemäß der vorliegenden Erfindung nahezu beliebig gestaltet werden. Neben kreisförmig begrenzten Ausführungsformen lassen sich Stern- und Polygonprofile problemlos erzeugen. Bei Rechteckprofilen können die Randzonen beliebig gestaltet und beispielsweise mit Ein- und/oder Auswölbungen versehen werden. Auf diese Weise ist es beispielsweise möglich, sogenannte Profilbretter nahezu identisch nachzubilden, die mit Nut und Feder versehen und hierdurch ineinanderfügbar und zu großen Flächengebilden vereinbar sind. Das Verhältnis aus der Tiefe und Breite entsprechender Profile kann problemlos 1:4 bis 1:6 betragen. Auf eine diesbezügliche Verwendung des erfindungsgemäßen Verfahrens und der Vorrichtung bei der Herstellung entsprechender Hohlkörper nehmen die Ansprüche 13 bis 20 bezug.

Das Profil des Formkerns kann sich parallel zu dem Profil der Innenwandung erstrecken, was es ermöglicht, bei sparsamem Werkstoffeinsatz hohe statische Wertigkeiten zu erhalten.

Eine vereinfachte Entformung des Formkerns läßt sich demgegenüber häufig erreichen, wenn der Formkern von kreisförmig begrenztem Profil ist. Neben einer Verjüngung seines Profils in Richtung des vorspringenden Endes kann eine Oberflächenbeschichtung mit einem antiadhäsiven Mittel sinnvoll sein, beispielsweise eine Beschichtung mit PTFE. Daneben kann eine Relativverdrehung des Formkernes um seine Achse den Entformungsvorgang erleichtern. Die Anbringung eines Schraubengewindes auf der Außenseite kann ebenfalls in die Überlegungen einbezogen werden und begünstigt bei einer gegenseitigen Überlagerung der Ausschraub- und Ausziehbewegung die Entnahme.

Der Formkern kann mehrteilig ausgebildet und zumindest auf zwei einander gegenüberliegenden Seiten durch unabhängig voneinander bewegliche Teilkerne gebildet sein, um den Entformungsvorgang weiter zu vereinfachen. Hierbei besteht die Möglichkeit, die beiden Teilkerne gegebenenfalls mittels eines unabhängig voneinader beweglichen Keilschiebers aufeinander abzustützen, der gegebenenfalls eine in Richtung seines vorderen Endes gleichmäßig verminderte Dicke hat. Nach der Entnahme des Keilscheibers lassen sich die Teilkerne bei einer solchen Ausführung leicht von der Oberfläche des erzeugten Hohlkörpers lösen und aus desssen Hohlraum entfernen.

Die bei dem erfindungsgemäßen Verfahren zur Anwendung gelangende Hohlform kann sehr einfach gestaltet sein und beispielsweise aus einem dünnwandigen Rohr aus metallischem Werkstoff bestehen. Sie wird zweckmäßig erst nach dem Erreichen der kontinuierlich durchgehenden Benetzung ihrer Innenwandung mit Bestandteilen des Pastenstranges durch ein sekundäres Kühlmittel gekühlt, um eine übereinstimmende Ausbildung der Innen- und der Außenstruktur des gebildeten Hohlkörpers auf seiner gesamten Länge zu gewährleisten. Im Anschluß hieran kann die Abkühlung des gebildeten Hohlkörpers mit intensiven Mitteln erfolgen, beispielsweise durch unmittelbares Eintauchen der gefüllten Hohlform in ein Wasserbad. Die porenfreie Randzone des gebildeten Hohlkörpers bedingt dabei eine zügige Abkühlung und Verfestigung der für die Formbeständigkeit maßgeblichen Bereiche. Die Entformung kann bereits nach kurzer Zeit erfolgen, was unter wirtschaftlichen Gesichtspunkten von großem Vorteil ist.

Der Gegenstand der Erfindung wird nachfolgend anhand der in der Anlage beigefügten Zeichnung weiter verdeutlicht. Es zeigen:

Fig.1 schematisch in längs geschnittener Darstellung eine beispielhafte Vorrichtung zur Durchführung des erfindungsgemäßen Verfahrens.

Fig.2 die Vorrichtung gemäß Fig.1 in einer Ansicht von oben.

Fig.3 das Prinzip der Einspeisung des Pastenstranges in die Hohlform.

Fig.4-7 einige bespielhafte Profilformen von säulenförmigen Hohlkörpern, die nach dem erfindungsgemäßen Verfahren erhältlich sind.

Fig.8 einen mehrteiligen Formkern in längsgeschnittener Darstellung

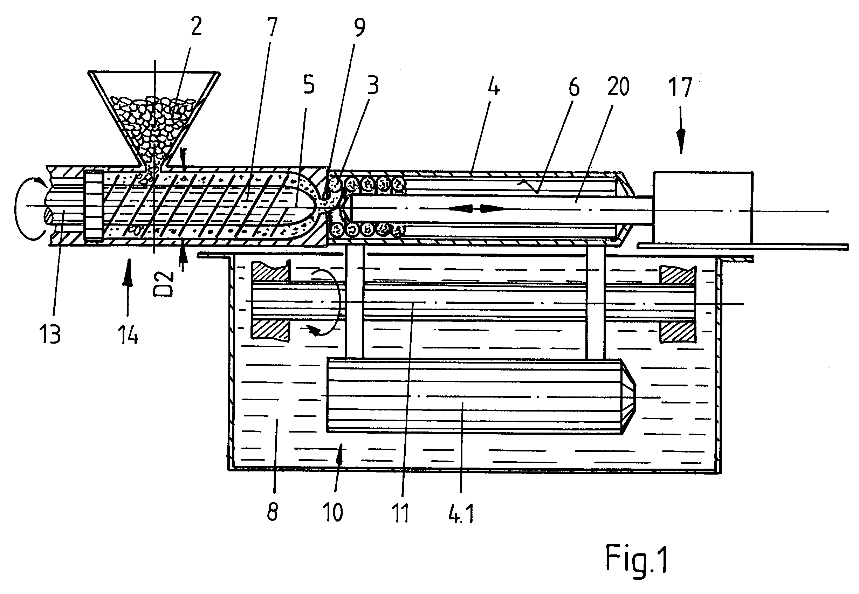

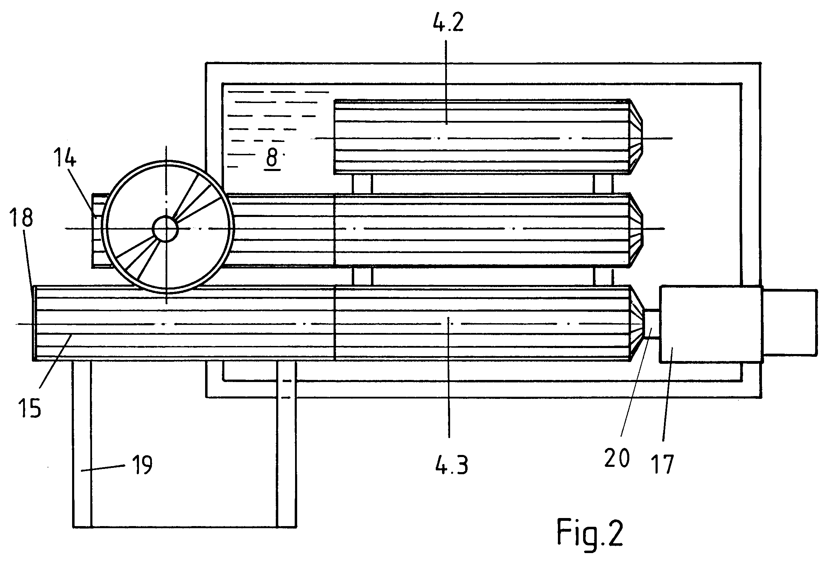

Die in den Figuren 1 und 2 gezeigte Vorrichtung besteht aus einem Extruder 14, der oberhalb eines Wasserbades 8 angeodnet ist.

Der Extruder 14 weist ein Extrudergehäuse auf, in dem eine Extruderschnecke 7 mittels einer Antriebswelle 13 relativ verdrehbar angeordnet ist. Die Extruderschnecke 7 ist auf ihrem Außenumfang mit gewindegangartig ausgebildeten Stegen versehen, durch die das mittels eines Trichters am linken Ende eingefüllte Kunststoffgranulat 2 in eine fortschreitende, nach rechts gerichtete Vorwärtsbewegung versetzbar ist. Das Extrudergehäuse weist einen Innendurchmesser $D_2$ auf, der am vorderen Ende im Bereich der Austrittsöffnung 9 verengt ist auf einen kleineren Durchmesser $D_1$. Das am linken Ende eingegebene Kunststoffgranulat 2 kann den Extruder 14 hierdurch nicht unverändert passieren sondern es wird einer starken Walkbeanspruchung ausgesetzt, die ein Erschmelzen und eine intensive Durchmischung des durch den Trichter zugeführten Kunststoffgranulates 2 bedingt. Das Verhältnis aus den Durchmessern $D_2$ und $D_1$ beträgt etwa 4. Der aus der Austrittsöffnung 9 austretende Kunststoff hat dadurch die Form eines im wesentlichen homogen zusammengesetzten, zähviskosen Pastenstranges, der sich in einer rotierenden Vorwärtsbewegung nach rechts befindet.

Dem Extruder 14 ist auf der rechten Seite eine Hohlform 4 vorgelagert, welche durch ein dünnwandiges, metallisches Rohr gebildet ist, das mittels einer Andrückeinrichtung 16 an die Stirnseite des Extruders 14 angedrückt wird. Die Hohlform 4 ist der Austrittsöffnung 9 und der Extruderschnecke 8 in koaxialer Weise zugeordnet. Sie ist in einem Revolver 10 gelagert, der neben der Hohlform 4 noch weitere Hohlformen 4.1 bis 4.3 umfaßt und um eine Achse 11 verdrehbar ist, die sich parallel zu der Achse des Extruders 14 erstreckt. Die einzelnen Hohlformen können dadurch quer zur Austrittsrichtung des Extruders bewegt und wahlweise vor der Austrittsöffnung 9 positioniert werden. Die in dem Revolver 10 enthaltenen Hohlformen sind stets von säulenförmiger Gestalt und von der linken Seite zentrisch zur Achse befüllbar. Sie können sich bei Gewährleistung dieser Bedingung durch eine voneinander abweichende Profilform voneinander unterscheiden.

Im rechten Teil der Darstellung ist eine Hilfsvorrichtung 17 gezeigt, die auf einem Schlitten montiert ist und einen Formkern 20 trägt. Dieser ist von kreisförmig begrenztem Profil, in eine Drehbewegung um seine Achse versetzbar und koaxial in bezug auf die Achse des Extruders angeordnet. Der Formkern besteht aus Aluminium. Eine nicht gezeigte Kühlvorrichtung erlaubt die kontinuierliche Durchführung eines Kühlmittels zur schnellen Verminderung des Außendurchmessers.

Der Revolver 10 ist in ein Wasserbad 8 eintauchend angeordnet, wobei seine Achse 11 von dem Wasserspiegel überflutet wird. Die Temperatur des Wasserbades 8 kann der Raumtemperatur entsprechen.

Oberhalb des Wasserbades 8 ist neben dem Extruder 14 liegend, eine Auffangwanne 15 angeordnet. Diese dient der Aufnahme von fertiggestellten Hohlkörpern 1, welche in dem vorliegenden Beispiel durch eine nicht gezeigte mechanisch arbeitende Auswerfereinrichtung aus der Hohlform 4.3 ausgestoßen werden. Ein Wegbegrenzer 18 gewährleistet hierbei eine übereinstimmende Positionierung der ausgestoßenen Hohlkörper 1 in der Wanne 15. Diese kann anschließend um ihre Achse (in der Zeichenebene) nach unten geschwenkt werden, wodurch der enthaltene Hohlkörper 1 in einer Sammeleinrichtung 19 gelangt, die beispielsweise aus einer Transportpalette oder ähnlichem bestehen kann.

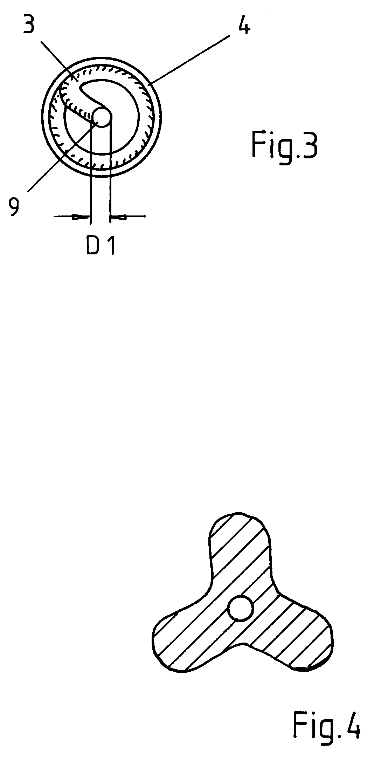

In Figur 3 ist die Einspeisung des Pastenstranges 3 in das Innere einer Hohlform 4 schematisch angedeutet. Der Pastenstrang 3 gelangt dabei durch die Austrittsöffnung 9 des Extruders 14 um seine Achse rotierend und in einer Vorwärtsbewegung befindlich zentral am stirnseitigen Ende in die Hohlform 4, welche von einer starren Innenwandung umschlossen und in bezug auf die Austrittsöffnung 9 in starrer Weise festgelegt ist. Zentrisch in der Hohlform ist der Formkern von kreisförmig begrenztem Profil angeordnet. Dieser wird im Bereich der Stirnseite durch eine Kegelfläche begrenzt. Der Pastenstrang 3 befindet sich in einem leicht verformbaren Zustand und legt sich, bedingt durch die Schwerkraft, zunächst unterhalb der Austrittsöffnung 9 an die Innenwandung der Hohlform 4 oder an die Stirnfläche an, wo sich durch die adhäsiven Eigenschaften des Pastenstranges 3 eine gewisse gegenseitige Verklebung mit der Hohlform 4 oder der Stirnfläche ergibt. Bedingt durch die Nachführung von weiteren, um ihre Achse rotierenden Bestandteilen des Pastenstranges 3 erfolgt die weitere Ablagerung in Umfangsrichtung des Spaltes zwischen der Hohlform 4 und dem Formkern 20, wobei sich eine gegenseitige Verklebung mit der Innenwandung 6 ergibt beziehungsweise mit zuvor abgelegten Bestandteilen des Pastenstranges 3 und dem Formkern 20. Der zunächst verfügbare Freiraum zwischen abgelegten Bestandteilen des Pastenstranges 3 und der Austrittsöffnung 9 wird hierdurch völlig ausgefüllt, so daß sich anschließend eine Umverlagerung von bereits abgelegten Bestandteilen in noch verfügbare Freiräume ergibt unter Bildung eines ersten Teilabschnittes eines säulenförmigen Hohlkörpers. Zugleich wird die zunächst vorhandene Verklebung mit der Innenwandung 6 und dem Formkern 20 zerstört und, während am linken Ende ständig neue Bestandteile des Hohlkörpers 1 gebildet werden, das rechte Ende des Hohlkörpers zunehmend in der Zeichenebene nach rechts verlagert. Der Vorgang wird solange fortgesetzt, bis der verfügbare Freiraum vollständig gefüllt und die Innenwandung 6 und der Formkern 20 kontinuierlich durchgehend von Bestandteilen des Pastenstranges 3 benetzt sind. Das Erreichen des diesbezüglichen Zustandes wird durch eine nicht gezeigte Meßeinrichtung erfaßt. Diese ist signalleitend mit einem Schrittschaltwerk verbunden, welche beim Eintreten des angegebenen Zustandes eine Unterbrechung der Förderung des Extruders auslöst, die Abkühlung und Entnahme des Formkerns 20 durch eine Relativbewegung nach rechts sowie eine Schwenkung des Revolvers 10 um seine Achse. Die befüllte, in heißem Zustand befindliche Hohlform 4 wird dabei in das Wasserbad 8 getaucht, eine zuvor in dem Wasserbad abgekühlte, befüllte Hohlform 4.1 in eine Entladeposition vor der Auffangwanne 15 gebracht und eine zuvor in der Entladeposition befindliche, weitere Hohlform in die Befüllposition überführt. Nach dem Einführen des Formkerns 20 in die Hohlform 4 kann der Extruder 14 anschließend erneut in Betrieb gesetzt und durch den mechanischen Auswerfer eine Entleerung der in der Entladeposition befindlichen Hohlform 4.3 bewirkt werden um den nächsten Arbeitszyklus einzuleiten.

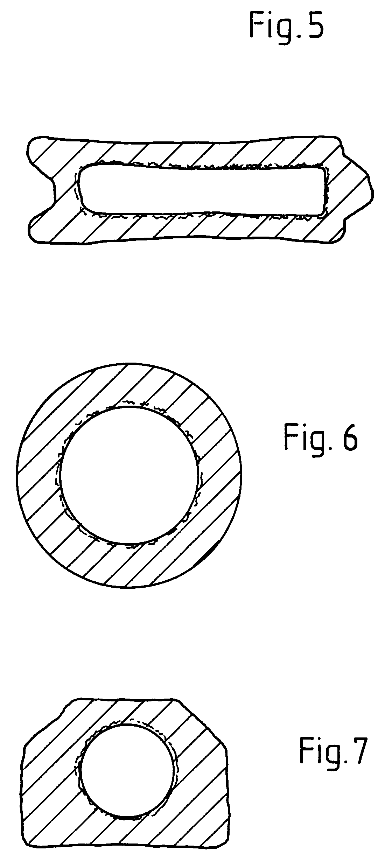

Die Figuren 4-7 zeigen beispielhafte Formen des Außenprofils und der Innenstruktur von säulenförmigen Hohlkörpern, die sich mit dem erfindungsgemäßen Verfahren und der gezeigten Vorrichtung erhalten lassen. Allen Hohlkörpern ist gemeinsam, daß sie neben einer nahezu porenfreien Randzone von im wesentlichen übereinstimmenden Breite einen in nahezu schaumförmigem Zustand befindliche, radial nach innen weisende Zone aufweisen. Die Hohlkörper zeichnen sich neben einer guten mechanischen Widerstandsfähigkeit durch eine ausgezeichnete chemische Beständigkeit aus. Die Oberfläche ist völlig geschlossen und kann in beliebiger Weise strukturiert werden, was in ästhetischer Hinsicht von großem Vorteil ist. Holz- und lederartig erscheinende Narbungen lassen sich problemlos erzeugen.

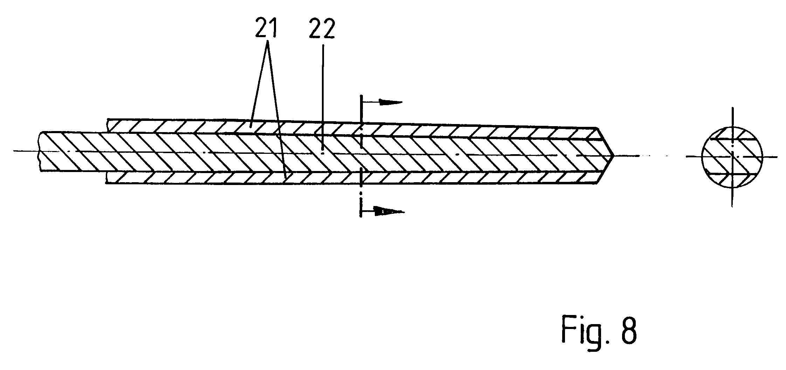

Fig.8 zeigt einen mehrteiligen Formkern, der auf zwei einander gegenüberliegenden Seiten durch unabhängig voneinander bewegliche Teilkerne 21 gebildet ist, die mittels eines unabhängig beweglichen Keilschiebers 22 aufeinander abgestützt sind. Der Keilschieber 22 hat eine in Richtung seines vorderen Endes geringfügig verminderte Dicke. Er läßt sich dadurch leicht aus dem Zwischenraum zwischen den Teilkernen 21 entnehmen. Anschließend lösen sich die Teilkerne 21 leicht von der Oberfläche des neu gebildeten Hohlkörpers, wobei keine nennenswerte Reibungsbeanspruchung auftritt. Ihre Entfernung ist dadurch unter weitgehender Umgehung von Adhäsionsproblemen stark erleichtert. Eine der Oberfläche des Formkerns gegebenenfalls anhaftende, antiadhäsive Beschichtung bedarf dadurch nur in großen Zeitabständen der Erneuerung.

**Patentansprüche**

1. Verfahren zur Herstellung eines säulenförmigen Körpers, bei dem ein Gemisch mit einem wesentlichen Gehalt an thermoplastischen Partikeln zu einem Pastenstrang erschmolzen, in eine Hohlform eingebracht, in der Hohlform schleifenartig aufeinandergeschichtet und in die Gestalt des Körpers überführt wird, wonach der Körper durch Abkühlung verfestigt und entnommen wird, dadurch gekennzeichnet, daß der Pastenstrang (3) um seine Achse rotierend und konzentrisch an der Stirnseite in eine Hohlform (4) eingespeist wird, die in einem Abstand von der Innenwandung (6) einen Formkern (20) enthält, daß der Pastenstrang in dem durch den Abstand gebildeten Freiraum der Innenwandung (6) in Umfangsrichtung folgend zur Ablage gebracht wird und daß die Einspeisung fortgesetzt wird, bis die Innenwandung (6) und der Formkern (20) von Bestandteilen des Pastenstranges (3) kontinuierlich durchgehend benetzt sind.

2. Verfahren nach Anspruch 1, dadurch gekennzeichnet, daß der Pastenstrang (3) durch die Extruderschnecke (7) eines Einschneckenextruders (14) in die rotierende Bewegung versetzt wird.

3. Verfahren nach Anspruch 1 oder 2, dadurch gekennzeichnet, daß die Hohlform (4) und/oder der Formkern (2) nach Erreichen der kontinuierlich durchgehenden Benetzung durch ein sekundäres Kühlmittel gekühlt wird.

4. Verfahren nach Anspruch 1 bis 3, dadurch gekennzeichnet, daß der Formkern (20) vor der Hohlform gekühlt wird.

5. Verfahren nach Anspruch 3 bis 4 , dadurch gekennzeichnet, daß die Hohlform (4) durch Eintauchen in ein Wasserbad (8) gekühlt wird.

6. Vorrichtung zur Durchführung des Verfahrens nach mindestens einem der Ansprüche 1 - 5, bei der ein Extruder mit einer Extruderschnecke und einer kreisförmig begrenzten Austrittsöffnung für das Erschmelzen des Gemisches vorgesehen ist sowie eine Einrichtung zur Formgebung des Körpers, wobei die Extruderschnecke, die Austrittsöffnung und die Einrichtung zur Formgebung koaxial zueinander angeordnet sind, dadurch gekennzeichnet, daß der Extruder (14) nur eine Extruderschnecke (7) aufweist und daß die Einrichtung zur Formgebung aus einer Hohlform (4) besteht, die von starren Innenwänden (6) umschlossen ist sowie aus einem Formkern (20), der von dem dem Extruder gegenüber liegenden Ende in die Hohlform vorspringt.

7. Vorrichtung nach Anspruch 6, dadurch gekennzeichnet, daß der Formkern (20) einen in Richtung seines vorspringenden Endes gleichmäßig verjüngten Querschnitt aufweist.

8. Vorrichtung nach Anspruch 6 bis 7, dadurch gekennzeichnet, daß der Formkern auf zumindest zwei einander gegenüberliegenden Seiten durch unabhängig voneinander bewegliche Teilkerne (21) gebildet ist.

9. Vorrichtung nach Anspruch 8, dadurch gekennzeichnet, daß die Teilkerne (21) durch einen unabhängig beweglichen Keilschieber (22) aufeinander abgestützt sind und daß der Keilschieber (22) eine in Richtung seines vorspringenden Endes gleichmäßig verminderte Dicke hat.

10. Vorrichtung nach Anspruch 6 bis 9, dadurch gekennzeichnet, daß die Austrittsöffnung (9) einen freien Durchmesser D1 aufweist der 0,3 bis 0,8 mal so groß wie der freie Durchmesser D2 des Extruders (14).

11. Vorrichtung nach Anspruch 6 bis 9, dadurch gekennzeichnet, daß neben der Hohlform (4) zumindest zwei weitere Hohlformen (4.1 bis 4.3) vorgesehen sind und daß die Hohlformen (4 bis 4.3) quer zur Austrittsrichtung des Extruders (14) bewegbar und wahlweise vor der Austrittsöffnung (9) positionierbar sind.

12. Vorrichtung nach Anspruch 6 bis 11, dadurch gekennzeichnet, daß nur ein einziger, koaxial zu dem Extruder angeordneter Formkern (20) vorgesehen ist und daß der Formkern (20) parallel zu seiner Achse vor- und zurückbewegbar ist.

13. Vorrichtung nach Anspruch 9 bis 11, dadurch gekennzeichnet, daß alle Hohlformen (4 bis 4.3) in einem Revolver (10) zusammengefaßt und um eine gemeinsame Achse (11) drehbar sind, die sich parallel zu der Achse (5) des Extruders (14) erstreckt.

14. Vorrichtung nach Anspruch 13, dadurch gekennzeichnet, daß der Revolver (10) zumindest bis zu seiner Achse (11) in ein Wasserbad (8) eintauchend angeordnet ist und daß der Extruder (14) und eine Auffangwanne (15) für aus den Hohlformen (4) ausgestoßene Körper oberhalb des Wasserbades (8) nebeneinander liegend angeordnet sind.

15. Verwendung des Verfahrens nach mindestens einem der Ansprüche 1 bis 5 zur Herstellung eines säulenförmigen Körpers mit einem kreisförmigen Profil.

16. Verwendung des Verfahrens nach mindestens einem der Ansprüche 1 bis 5 zur Herstellung eines säulenförmigen Körpers mit einem polygonförmigen Profil.

17. Verwendung des Verfahrens nach mindestens einem der Ansprüche 1 bis 5 zur Herstellung eines säulenförmigen Körpers mit einem sternförmigen Profil.

18. Verwendung des Verfahrens nach mindestens einem der Ansprüche 1 bis 5 zur Herstellung eines säulenförmigen Körpers mit einem rechteckigen Profil, das eine Aus- oder Einwölbung im Bereich von zumindest einer Seitenfläche aufweist.

19. Verwendung der Vorrichtung nach mindestens einem der Anspüche 6 - 12 zur Herstellung eines säulenförmigen Körpers mit einem kreisförmigen Profil.

20. Verwendung der Vorrichtung nach mindestens einem der Ansprüche 6 - 12 zur Herstellung eines säulenförmigen Körpers mit einem polygonförmigen
Profil.

21. Verwendung der Vorrichtung nach mindestens einem der Ansprüche 6 - 12 zur Herstellung eines säulenförmigen Körpers mit einem sternförmigen Profil.

22. Verwendung der Vorrichtung nach mindestens einem der Ansprüche 6 - 12 zur Herstellung eines säulenförmigen Körpers mit einem rechteckigen Profil, das eine Aus- oder Einwölbung im Bereich von zumindest einer Seitenfläche aufweist.

Fig.1

EP 0 513 751 A1

Fig.2

EP 0 513 751 A1

3    4

Fig.3

9

D 1

Fig.4

# Fig. 5

# Fig. 6

# Fig. 7

Fig. 8

21 22

| | **EINSCHLÄGIGE DOKUMENTE** | | EP 92108050.3 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
| A | DE - B - 1 778 265 (SCHÖNEBECKER BRUNNENFILTER) * Gesamt * -- | 1,6 | B 29 C 31/04 B 29 C 45/47 |
| A | DE - B - 1 232 728 (HARRIET RAGNHILD HOJBERG- -PEDERSEN) * Gesamt * -- | 1,6 | |
| A | DE - C - 2 626 342 (MOTOSACOCHE) * Gesamt * ---- | | |
| | | | RECHERCHIERTE SACHGEBIETE (Int Cl⁵) |
| | | | B 29 B B 29 C |

Der vorliegende Recherchenbericht wurde für alle Patentansprüche erstellt.

| Recherchenort | Abschlußdatum der Recherche | Prüfer |
|---|---|---|
| WIEN | 04-08-1992 | REININGER |